# EUROPÄISCHE PATENTSCHRIFT

(11) **EP 1 304 513 B1**
(45) Veröffentlichungstag und Bekanntmachung des Hinweises auf die Patenterteilung: **20.07.2005**
(21) Anmeldenummer: 02021129.8
(22) Anmeldetag: 23.09.2002
(51) Int. Cl.: F16H 63/36

(54) **Schaltgetriebe mit Verriegelungseinrichtung zur Verriegelung einzelner Gänge**
Transmission having a locking mechanism locking separate gear ratios
Boîte de vitesses avec dispositif de verouillage des rapports individuels

(30) Priorität: 18.10.2001 DE 10151467
(43) Veröffentlichungstag der Anmeldung: 23.04.2003
(73) Patentinhaber: Bayerische Motoren Werke Aktiengesellschaft, 80809 München (DE)
(72) Erfinder: Körber, Martin, 85375 Neufahrn (DE); Wagner, Norbert, 81549 München (DE)

(56) Entgegenhaltungen:
- EP-A- 1 236 936
- DE-A- 3 929 270
- DE-A- 19 843 584
- DE-A- 19 951 683
- PATENT ABSTRACTS OF JAPAN vol. 005, no. 154 (P-082), 29. September 1981 (1981-09-29) & JP 56 085124 A (FUJI HEAVY IND LTD), 11. Juli 1981 (1981-07-11)

## Beschreibung

Die vorliegende Erfindung betrifft ein Schaltgetriebe mit einer Verriegelungseinrichtung zur Verriegelung einzelner Gänge gemäß dem Oberbegriff des Patentanspruches 1. Eine derartige Verriegelungseinrichtung ist aus der DE 199 51 683 A1 bekannt.

Die Verriegelungseinrichtung eines Handschaltgetriebes hat primär folgende Funktionen:
a) Verhindern, dass zwei Gänge gleichzeitig betätigt werden. Wenn nämlich bei schnellem Schalten, beispielsweise vom zweiten in den dritten Gang, die Schaltgasse der Gänge 3/4 nicht sauber angewählt wird, d.h. wenn "zwischen den Schaltgassen" 1/2 und 3/4 geschaltet wird, besteht die Gefahr, dass die Schaltgabeln bzw. Schaltschwingen beider Schaltgassen gleichzeitig betätigt werden.
b) Verhindern, dass bei eingelegtem Gang ein weiterer Gang in Schalteingriff kommt. Dies könnte durch "selbsttätiges" Verschieben von Schiebemuffen, z.B. aufgrund von Fahrzeugerschütterungen passieren, bzw. wenn Rastierungselemente defekt sind, welche Kräfte auf Schaltgabeln bzw. Schaltschwingen ausüben.

Aus der DE 39 29 270 A1 ist ein Handschaltgetriebe bekannt, bei dem die den einzelnen Schaltgassen zugeordneten Schiebemuffen jeweils über eine Schaltstange und eine daran befestigte Schaltgabel axial verschieblich sind. Bei diesem Getriebe ist die "Verriegelungseinrichtung" durch eine Verriegelungsplatte gebildet. Die Verriegelungsplatte ist orthogonal zu den Schaltstangen angeordnet und in Plattenrichtung verschieblich im Getriebegehäuse gelagert. Die einzelnen Schaltstangen erstrecken sich durch eine in der Verriegelungsplatte vorgesehene Ausnehmung und weisen jeweils Sperrnuten auf, in die Sperrkanten der Verriegelungsplatte eingreifen. Durch die Verriegelungsplatte ist sichergestellt, dass stets nur eine der Schaltstangen axial verschieblich ist und die anderen Schaltstangen gesperrt sind.

Bei Verriegelungseinrichtungen unterscheidet man "aktive" und "passive" Verriegelungssysteme. Ein aktives Verriegelungssystem ist beispielsweise aus der DE 196 15 267 C1 bekannt und zeichnet sich dadurch aus, dass bereits beim Anwählen einer Schaltgasse nur diese freigegeben wird und die anderen Schaltgassen verriegelt werden. Im Unterschied dazu wird bei einem passiven Verriegelungssystem die Verriegelung erst dann "aktiviert", wenn die Schaltgabel bzw. Schaltschwinge geschaltet wird.

Aus anmelderinternem Stand der Technik ist ein Fünfganghandschaltgetriebe mit Schaltschwingen bekannt, bei dem zum Sperren einzelner Schaltschwingen drei im Getriebegehäuse gelagerte Sperrhebel vorgesehen sind, die gelenkig miteinander verbunden sind. Eine Erweiterung dieses "Sperrhebelsystems" auf ein Sechsganggetriebe ist problematisch. Bei einem Sechsganggetriebe wäre nämlich ein zusätzlicher Sperrhebel erforderlich. Dies würde zu einer Addition von Bauteiltoleranzen führen und wäre konstruktiv schwer zu beherrschen.

Aufgabe der Erfindung ist es, eine konstruktiv einfach aufgebaute Verriegelungseinrichtung für Handschaltgetriebe zu schaffen.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einem "stangenartigen" Verriegelungselement, das sich in Axialrichtung über mehrere Betätigungselemente erstreckt und das in den einzelnen möglichen Getriebeschaltstellungen jeweils mit einem Teil der vorhandenen Betätigungselemente in Eingriff steht. Wenn eines der Betätigungselemente aus seiner Neutralstellung in eine Schaltstellung geschaltet wird, dann wird die "Verriegelungsstange zumindest mit einem Teil der vorhandenen Betätigungselemente in Sperreingriff gebracht, d.h. diese Betätigungselemente sind dann gesperrt. Da die Sperrung beim Einlegen eines Ganges, d.h. beim Betätigen eines Betätigungselements erfolgt, liegt gemäß der o.g. Terminologie eine "passive" Verriegelungseinrichtung vor.

Die "Betätigungselemente" können Schaltschwingen oder Schaltgabeln sein. Sie weisen einen "Sperrfinger" auf. Zum Sperren des Betätigungselements sind an der Verriegelungsstange kerbenartige bzw. nutartige Ausnehmungen vorgesehen, die mit dem jeweils zugeordneten Sperrfinger in Eingriff gebracht werden können.

Die kerbenartigen Ausnehmungen können an gegenüberliegenden Längsseiten des stangenartigen Verriegelungselements vorgesehen sein. Die Ausnehmungen müssen aber nicht zwingend an den Außenseiten bzw. Längsseiten des Verriegelungselements vorgesehen sein.

Bei einer Variante der Erfindung weist das Verriegelungselement mehrere geschlossene, z.B. rechteckförmige oder langlochartige "Schaltausnehmungen" auf, in welche die Sperrfinger hineinragen und in denen die Sperrfinger in bestimmten Stellungen längsverschieblich, d.h. schaltbar sind. In diesem Fall sind die kerbenartigen Ausnehmungen an den seitlichen "Rändern" der rechteckförmigen oder langlochartigen "Schaltausnehmungen" vorgesehen. In der Draufsicht erkennt man, dass die kerbenartigen Ausnehmungen nicht an der Außenkontur des Verriegelungselements liegen, sondern innerhalb seiner Außenkontur. Die kerbenartigen Ausnehmungen bilden also einen Teil der Kontur der Schaltausnehmungen. Wenn es sich bei dem Verriegelungselement um eine Verriegelungsplatte handelt können die Schaltausnehmungen bzw. die kerbenartigen Ausnehmungen z.B. gestanzt sein.

Die Sperrfinger der den einzelnen Schaltgassen zugeordneten Betätigungselemente sind "versetzt" angeordnet. Das heißt, ein Teil der vorhandenen Sperrfinger ist auf einer ersten Längsseite der Verriegelungsstange angeordnet und die übrigen Sperrfinger sind auf der gegenüberliegenden Längsseite der Verriegelungsstange angeordnet. Vorzugsweise sind die Sperrfinger von Schaltgassen, die im Schaltschema nebeneinander liegen, abwechselnd auf der einen bzw. auf der anderen Längsseite der Verriegelungsstange angeordnet.

Bei der o.g. Variante der Erfindung, bei der die kerbenartigen Ausnehmungen einen Teil der Innenkontur der langlochartigen Schaltausnehmungen bilden, ist der Begriff "versetzt" so zu verstehen, dass ein Teil der kerbenartigen Ausnehmungen an linken Längsseiten einzelner "Langföcher" und der andere Teil der kerbenartigen Ausnehmungen an rechten Längsseiten der übrigen "Langlöcher" vorgesehen sind.

Die Verriegelungsstange ist in Axialrichtung fest und in einer Querrichtung verschieblich angeordnet. Sie kann beispielsweise über einfaches Schiebelager quer verschieblich im Getriebegehäuse gelagert sein. Eine "gehäuseseitige" Lagerung ist aber nicht zwingend erforderlich. Die Verriegelungsstange kann nämlich auch ausschließlich über ihre "Sperrausnehmungen" an den aktuell in Eingriff stehenden Sperrfingern der Schaltschwingen gelagert sein.

Die Ausnehmungen der Verriegelungsstange weisen jeweils zwei V-förmig zusammenlaufende "Funktionsschrägen" auf. Wenn sämtliche Betätigungselemente in Neutralstellung sind und ein Betätigungselement geschaltet wird, dessen Sperrfinger in der Neutralstellung in Eingriff mit einer Ausnehmung der Verriegelungsstange steht, so kann dieser Sperrfinger beim Schalten des Betätigungselements an einer der Funktionsschrägen aus der Ausnehmung herausgleiten. Vom Sperrfinger des aktuell betätigten Betätigungselements wird dabei eine "Querkraft" auf die Verriegelungsstange ausgeübt. Die Verriegelungsstange wird durch diese Querkraft seitlich verschoben. Durch das Schalten des Betätigungselements aus seiner Neutralstellung in seine Schaltstellung und das dadurch bedingte seitliche Verschieben der Verriegelungsstange wird ein Teil der Sperrfinger mit der Verriegelungstange in Sperreingriff gebracht. Die Verriegelungsstange wird also ausschließlich durch das Bewegen der Betätigungselemente verschoben. Eine separate Betätigungsvorrichtung für die Verriegelungsstange ist somit nicht erforderlich.

Eine "Verriegelungsstange" gemäß der Erfindung hat gegenüber "mehrgliedrigen" Verriegelungseinrichtungen, den großen Vorteil, dass sehr geringe Bauteiltoleranzen erreicht werden. Desweiteren sind keine bzw. nur wenige gehäuseseitige Lagerungen erforderlich.

Die Verriegelungseinrichtung gemäß der Erfindung zeichnet sich ferner dadurch aus, dass zwischen der Schaltwelle, die mit dem vom Fahrer zu bedienenden Schalthebel verbundenen ist, und der Verriegelungsschiene keine Verbindung besteht. Die "lineare Verschiebung" der Verriegelungsschiene wird also nicht unmittelbar über den Schalthebel bzw. die damit verbundene Schaltwelle induziert, sondern ausschließlich über die Sperrfinger der Betätigungselemente, d.h. der Schaltgabeln bzw. Schaltschwingen.

Vorzugsweise sind die Betätigungselemente und die zugeordneten Ausnehmungen in der Verriegelungsstange so angeordnet, dass im "Schaltbild" benachbarte Schaltgassen, das heißt R und 1/2, 1/2 und 3/4 bzw. 3/4 und 5/6 nicht gleichzeitig geschaltet werden können.

Bei einer Variante der Erfindung ist auf beiden Seiten der Verriegelungsstange jeweils ein schwenkbar gelagerter "Zusatzhebel" vorgesehen. Die Zusatzhebel sind so angeordnet, dass die Sperrfinger der Schaltschwingen zwischen der Verriegelungsstange und dem jeweiligen Zusatzhebel liegen. Mit derartigen Zusatzhebeln kann sichergestellt werden, dass außer der aktuell betätigten Schaltgabel bzw. Schaltschwinge sämtliche anderen Schaltgabeln bzw. Schaltschwingen gesperrt sind.

Im folgenden wird die Erfindung anhand eines Ausführungsbeispiels im Zusammenhang mit der Zeichnung näher erläutert. Es zeigen:
- Figur 1: einen Querschnitt durch einen Teilbereich eines Getriebes im Bereich einer Schaltschwinge;
- Figur 2: ein 6-Gang-Getriebe mit Schaltschwingen, wobei alle Schaltschwingen in Neutralposition sind;
- Figur 3: eine Schaltstellung, in der einzelne Schaltschwingen verriegelt sind;
- Figur 4: eine Schaltstellung eines weiteren Ausführungsbeispiels, in der einzelne Schaltschwingen verriegelt sind; und
- Figur 5: ein Ausführungsbeispiel mit einer Verriegelungsstange mit Zusatzhebeln.

**FFigur 1** zeigt einen Querschnitt durch einen Teil eines Handschaltgetriebes im Bereich einer U-förmigen Schaltschwinge 1. An den beiden Schenkeln der Schaltschwinge 1 sind Schwenklagerzapfen 2, 3 vorgesehen. Über die Schwenklagerzapfen 2, 3 ist die Schaltschwinge 1 schwenkbar um eine Achse 4 im Getriebegehäuse gelagert. An einem Quersteg 5 der Schaltschwinge 1 ist ein Sperrfinger 6 vorgesehen. Der Sperrfinger 6 ist hier seitlich versetzt bezüglich einer Mittelhochachse 7 der Schaltschwinge 1 angeordnet.

Desweiteren ist eine in Axialrichtung verlaufende Verriegelungsstange 8 mit einer Verriegelungsausnehmung 9 vorgesehen. Die Verriegelungsstange 8 kann in einer Querrichtung 10 verschoben werden, wodurch der Sperrfinger 6 in Eingriff mit der Verriegelungsausnehmung 9 gebracht und die Schaltschwinge 1 gesperrt werden kann.

In den beiden Seitenschenkeln der Schaltschwinge 1 sind Mitnehmer bzw. Gleitsteine 11, 12 gelagert, die in eine umlaufende Ringnut (nicht dargestellt) einer Schiebemuffe 13 eingreifen. Die Schiebemuffe 13 ist drehfest aber axial verschieblich auf einer Festmuffe 14 angeordnet. Durch Verschwenken der Schaltschwinge 1 um die Schwenkachse 4 kann die Schiebemuffe 13 in Axialrichtung verschoben und ein Gang geschaltet werden.

Durch Verschieben der Verriegelungsstange 8 in Querrichtung 10 kann der "Schwenkfreiheitsgrad" der Schaltschwinge 1 gesperrt werden.

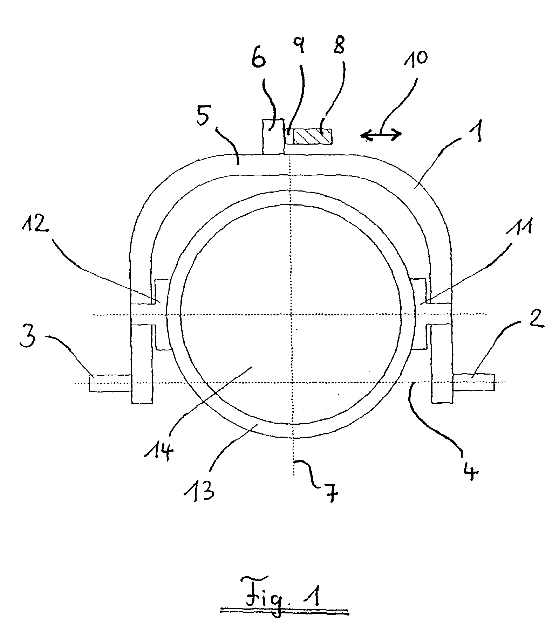

Vollständigkeitshalber wird darauf hingewiesen, dass in **Figur 1** die "Stelle", an der die über den Schalthebel vom Fahrer aufgebrachte Schaltkraft in die Schaltschwinge eingeleitet wird, nicht dargestellt ist.

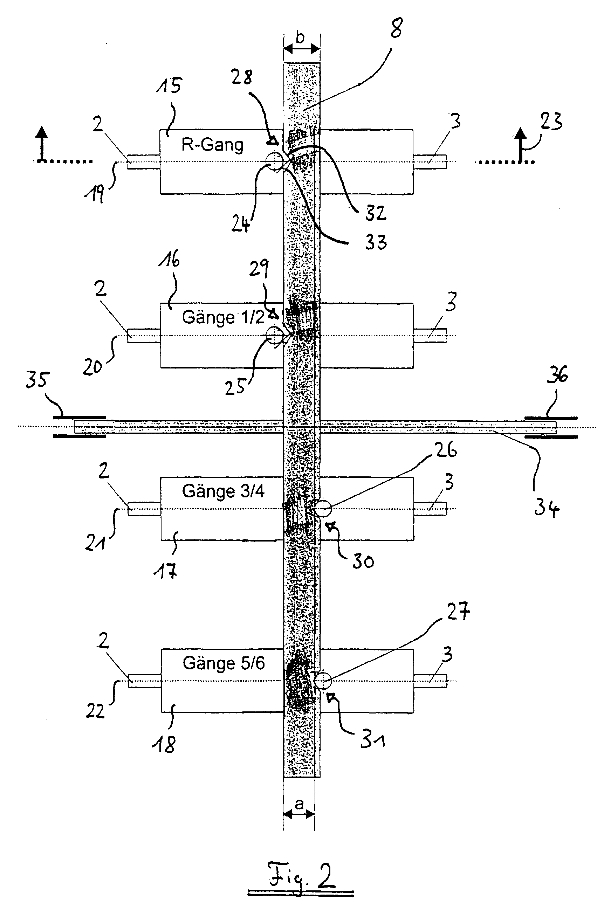

**Figur 2** zeigt einen Ausschnitt aus einem 6-Gang-Getriebe mit vier in Axialrichtung hintereinander angeordneten Schaltschwingen 15 - 18, die jeweils über zugeordnete Schwenklagerzapfen 2, 3 um Querachsen 19 - 22 schwenkbar sind. Die Schaltschwinge 15 schaltet ausschließlich den Rückwärtsgang und ist daher hier nur in einer durch Pfeile 23 angedeuteten Richtung schwenkbar. Die den anderen Schaltgassen zugeordneten Schaltschwingen 16 - 18 schalten jeweils zwei Gänge, nämlich die Schaltschwinge 16, den ersten und zweiten Gang, die Schaltschwinge 17 den dritten und vierten Gang und die Schaltschwinge 18 den fünften und sechsten Gang. Die Schaltschwingen 16 - 18 sind dementsprechend in zwei Richtungen schwenkbar.

An der in der hier gezeigten Darstellung erkennbaren Querstegen der Schaltschwingen 15 - 18 sind nach oben abstehenden Sperrfinger 24 - 27 vorgesehen. Die Sperrfinger 24 - 27 sind versetzt bezüglich der Verriegelungsstange 8 angeordnet, wobei die Sperrfinger 24 und 25 in der hier gezeigten Darstellung "links" und die Sperrfinger 26, 27 "rechts" von der Verriegelungsstange 8 angeordnet sind. Im Bereich der Sperrfinger 24 - 25 weist die Verriegelungsstange 8 Ausnehmungen 28 - 31 auf. Die Ausnehmungen 28 - 31 sind hier jeweils durch zwei V-förmige zusammenlaufende Funktionsschrägen 32, 33 gebildet.

Wie aus **Figur 2** ersichtlich ist, sind die Sperrfinger 24, 25 in einem Abstand a von den Sperrfingern 26, 27 angeordnet. Die Verriegelungsstange 8 hat hier eine Breite b, die größer als der Abstand a der Sperrfinger ist. Sie ist über eine Lagerstange 34 in Querrichtung verschieblich in getriebegehäusefesten Verschiebelagerbuchsen 35, 36 gelagert.

In der hier gezeigten Stellung befinden sich die Schaltschwingen 15 - 18 in ihrer Mittel- bzw. Neutralstellung. Dies ist daran erkennbar, dass sämtliche Sperrfinger 24 - 27 an den zugeordneten Ausnehmungen 28 - 31 ausgerichtet sind. In dieser Neutralstellung kann jede der Schaltschwingen 15 - 18 betätigt werden. Ein Verschwenken der Schaltschwingen 15, 16 hat hier keine Auswirkungen auf die Lage der Verriegelungsstange 8, da die zugeordneten Sperrfinger 24, 25 außer Eingriff sind. Ein Verschwenken der Schaltschwinge 17 bzw. 18 hingegen führt dazu, dass der zugeordnete Schaltfinger 26 bzw. 27 die Verriegelungsstange 8 entlang einer der zugeordneten Funktionsflächen nach "links" verschiebt und die Schaltschwingen 15, 16 sperrt.

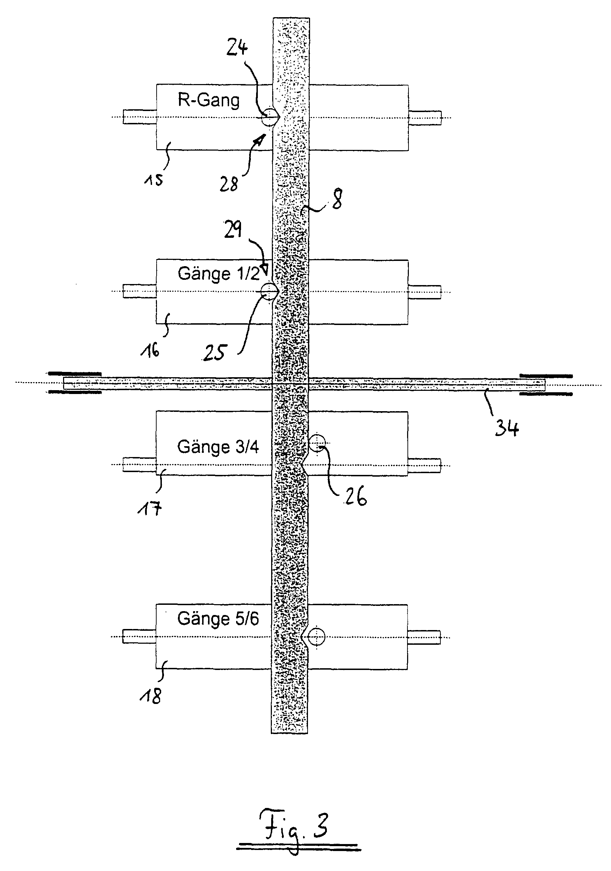

Dieser Sperrzustand ist in **Figur 3** dargestellt. Hier ist die Schaltschwinge 17 geschaltet, das heißt aus ihrer Mittel- bzw. Neutralstellung in Richtung der Lagerstange 34 verschwenkt. Im Vergleich zur Neutralstellung der Fig. 2 hat der Sperrfinger 26 der Schaltschwinge 17 die Verriegelungsstange 8 nach "links" gedrückt. In dieser Stellung greifen die Sperrfinger 24, 25 in die zugeordneten Ausnehmungen 28, 29 ein. Da der Sperrfinger 26 ein "Zurückverschieben" der Verriegelungsstange verhindert, sind die Schaltschwingen 15, 16 gesperrt. Ein unbeabsichtigtes Einlegen des Rückwärtsganges bzw. des ersten oder zweiten Ganges ist somit ausgeschlossen. Die Schaltschwinge 18 hingegen ist hier unverriegelt.

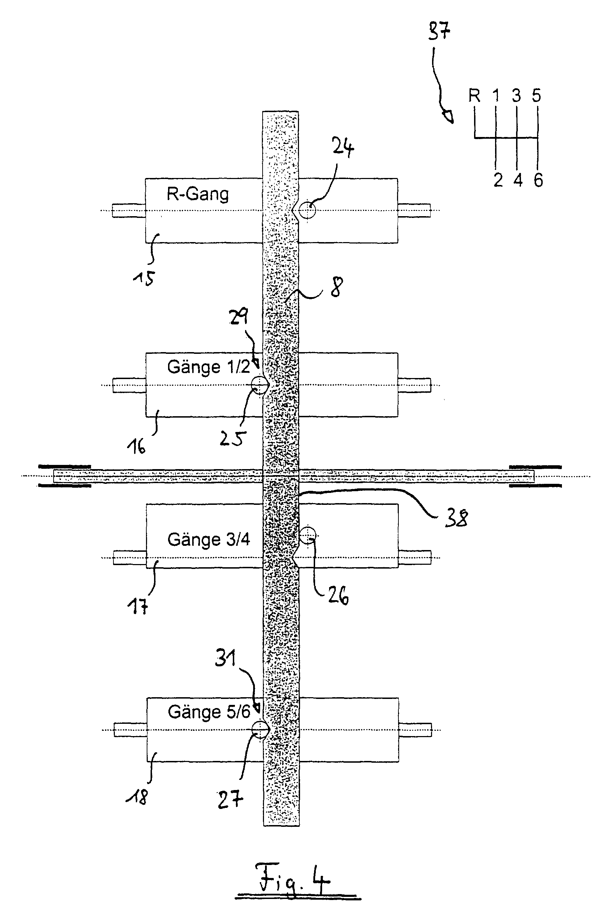

**Figur 4** zeigt ein Ausführungsbeispiel, bei dem ebenfalls die Schaltschwinge 17 geschaltet ist. Die Schaltschwinge 17 ist der Schaltgasse des dritten und vierten Ganges zugeordnet. Neben der Schaltgasse 3/4 liegen die Schaltgassen 1/2 bzw. 5/6, was am besten aus dem Schaltschema 37 erkennbar ist. Bei der in **Figur 4** gezeigten Schaltstellung liegt der Sperrfinger 26 an einer Außenseite 38 der Verriegelungsstange 8 an. Im Unterschied zu Figur 3 stehen hier die Sperrfinger 25 und 27 in Eingriff mit den zugeordneten Ausnehmungen 29, 31. Das heißt, hier sind die der geschalteten Schaltgasse 3/4 benachbarten Schaltgassen 1/2 bzw. 5/6 gesperrt.

Hierzu sind die in Axialrichtung aufeinanderfolgenden Sperrfinger 24 - 27 der im Schaltschema aufeinanderfolgenden Schaltgassen abwechselnd auf der "linken" bzw. "rechten" Seite der Verriegelungsstange 8 angeordnet. Hierdurch ist sichergestellt, dass diejenigen Schaltgassen gesperrt sind, die neben dem aktuell eingelegten Gang liegen.

Bei geschaltetem Rückwärtsgang sind die benachbarte Schaltgasse 1/2 und zusätzlich 5/6 gesperrt, 3/4 hingegen ist unverriegelt. Bei geschaltetem ersten oder zweiten Gang sind die benachbarten Schaltgassen R und 3/4 gesperrt, während 5/6 unverriegelt ist. Bei geschaltetem dritten oder vierten Gang ist 1/2 und 5/6 gesperrt, wohingegen R unverriegelt ist. Schließlich ist bei geschaltetem fünften oder sechsten Gang die Schaltgasse 3/4 und zusätzlich R gesperrt, wo hingegen 1/2 unverriegelt bleibt.

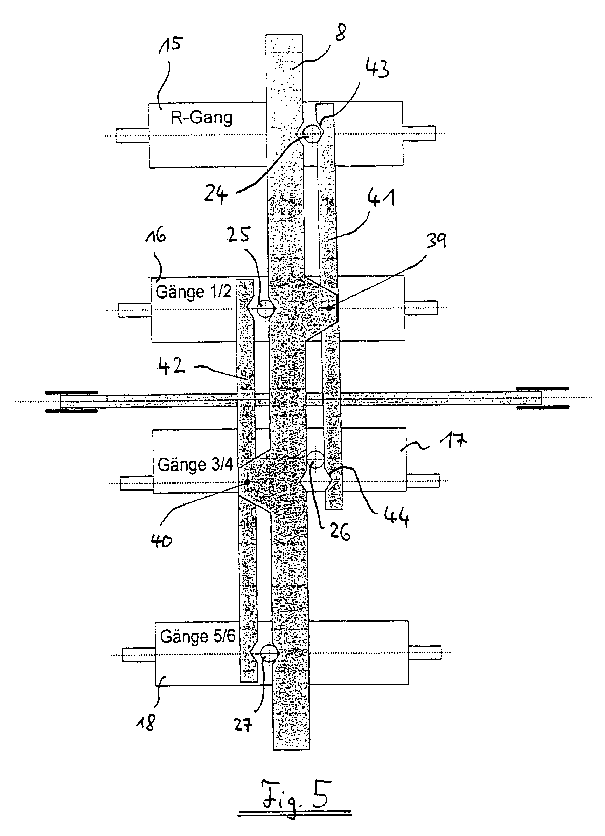

**Figur 5** zeigt ein Ausführungsbeispiel mit einer Verriegelungsstange 8, an der beidseitig über Schwenklager 39, 40 Zusatzsperrhebel 41, 42 angeordnet sind. Die Zusatzsperrhebel 41, 42 stellen im Zusammenwirken mit der Verriegelungsstange 8 sicher, dass, wenn ein Gang eingelegt ist, sämtliche anderen Schaltgabeln bzw. Schaltschwingen gesperrt sind.

Analog zu den Schaltstellungen der **Figuren 3, 4** ist auch in **Figur 5** die Schaltschwinge 17 geschaltet, wohingegen sich die Schaltschwingen 15, 16 und 18 in ihrer Mittel- bzw. Neutralstellung befinden. Im Unterschied zu den **Figuren 3 und 4** sind hier außer der aktuell geschalteten Schaltschwinge 17 sämtliche anderen Schaltschwingen gesperrt. Der Sperrfinger 26, welcher der Schaltschwinge 17 zugeordnet ist, drückt nämlich einerseits die Verriegelungsstange 8 nach "links", so dass die Sperrfinger 25, 27 in Sperreingriff kommen und die Schaltgassen 1/2 bzw. 5/6 sperren. Zusätzlich drückt der Sperrfinger 26 gegen den Zusatzhebel 41, so dass dieser mit einer seiner beiden Ausnehmungen 43, 44, nämlich mit der Ausnehmung 43, in Sperreingriff mit dem Sperrfinger 24 der Schaltschwinge 15 kommt.

Die Schwenklager 39, 40 können so ausgeführt sein, das die Zusatzsperrhebel 41, 42, wie in **Figur 5** dargestellt, um eine "Hochachse" schwenkbar sind. In diesem Fall sind die Schwenkhebel "seitlich", d.h. auf beiden Längsseiten der Verriegelungsstange 8 angeordnet.

Alternativ dazu kann auch vorgesehen sein, dass ein Zusatzhebel um eine "Querachse" der Verriegelungsstange 8 schwenkbar ist. In diesem Fall (nicht dargestellt) wäre der Zusatzhebel ähnlich einer Wippe an der in Fig. 5 dargestellten Oberseite der Verriegelungsstange 8 angeordnet. Er wäre dann in einer zur Zeichenebene der Fig. 5 senkrechten Ebene wippenartig schwenkbar. Der Zusatzhebel würde dann also mit seinen beiden freien Enden von "oben" an den Sperrfingern anliegen bzw. einen der beiden zugeordneten Sperrfinger sperren. Die kerbenartigen Ausnehmungen wären demnach an der der Oberseite der Sperrfinger zugewandten Unterseite des Zusatzhebels vorgesehen.

Alternativ zu **Figur 5** können die Zusatzsperrhebel 41, 42 auch am Getriebegehäuse (nicht dargestellt) gelagert sein.

## Patentansprüche

1. Schaltgetriebe mit
axial verschieblichen Schiebemuffen, die sich jeweils in einer Neutralstellung oder einer Schaltstellung befinden können,
den einzelnen Schiebemuffen zugeordneten Betätigungselementen (15 - 18), die dazu vorgesehen sind, die Schiebemuffen von Ihrer Neutralstellung in ihre Schaltstellung zu schalten, oder umgekehrt, wobei die Betätigungselemente (15 - 18) jeweils einen abstehenden Sperrfinger (24 - 27) aufweisen,
einem sich in Axialrichtung über die Betätigungselemente (15 - 18) erstreckenden Verriegelungselement (8), das Ausnehmungen (28 - 31) aufweist, die zum Sperren einzelner Betätigungselemente (15 - 18) vorgesehen sind, wobei, wenn eine der Schiebemuffen in ihrer Schaltstellung ist, zumindest ein Teil der anderen Schiebemuffen **dadurch** gesperrt ist, dass deren Sperrfinger (24 - 27) in Eingriff mit zugeordneten Ausnehmungen (28 - 31) des Verriegelungselements (8) stehen,
**dadurch gekennzeichnet, dass**
die Ausnehmungen (28 - 31) jeweils zwei kerbenartig zusammenlaufende Funktionsschrägen (32, 33) aufweisen, wobei, wenn sich alle Betätigungselemente (15 - 18) in ihrer Neutralstellung befinden, beim Betätigen eines Betätigungselements (15 -18), dessen Sperrfinger (24 - 27) in Eingriff mit einer Ausnehmung (28 - 31) des Verriegelungselements (8) steht, dieser Sperrfinger (24 - 27) entlang einer der Funktionsschrägen aus der Ausnehmung (28 - 31) herausgleitet und dabei das Verriegelungselement (8) in Querrichtung (19 - 22) verschiebt und zumindest einen Teil der Ausnehmungen (28 - 31) des Verriegelungselements (8) in Eingriff mit den Sperrfingern (24 - 27) der zugeordneten Betätigungselemente (15 - 18) bringt.

2. Schaltgetriebe nach Anspruch 1, **dadurch gekennzeichnet, dass** die Betätigungselemente (15 - 18) Schaltschwingen sind, mit jeweils einer Schwenkachse (19 - 22), die quer bezüglich der Axialrichtung verläuft.

3. Schaltgetriebe nach Anspruch 1 oder 2, **dadurch gekennzeichnet, dass** die Sperrfinger (24 -27) bezüglich dem Verriegelungselement (8) versetzt angeordnet sind und zwar so, dass ein Teil der vorhandenen Sperrfinger (24 -27) auf einer ersten Längsseite des Verriegelungselementes (8) und die übrigen Sperrfinger (24 -27) auf der gegenüberliegenden Längsseite des Verriegelungselements (8) angeordnet sind.

4. Schaltgetriebe nach einem der vorangehenden Ansprüche, **dadurch gekennzeichnet, dass** in Axialrichtung aufeinanderfolgende Sperrfinger (24 - 27) abwechselnd auf der einen bzw. anderen Längsseite des Verriegelungselements (8) angeordnet sind.

5. Schaltgetriebe nach einem der vorangehenden Ansprüche, **dadurch gekennzeichnet, dass** die Betätigungselemente Schaltgabeln sind.

6. Schaltgetriebe nach einem der vorangehenden Ansprüche, **dadurch gekennzeichnet, dass** das Verriegelungselement (8) in Axialrichtung fest und in einer dazu senkrechten Querrichtung verschieblich angeordnet ist.

7. Schaltgetriebe nach Anspruch 2, **dadurch gekennzeichnet, dass** das Verriegelungselement in einer Querrichtung verschieblich ist, die parallel zu den Schwenkachsen der Betätigungselemente ist.

8. Schaltgetriebe nach einem der vorangehenden Ansprüche, **dadurch gekennzeichnet, dass** das Verriegelungselement (8) in Quererrichtung (19 - 22) verschieblich in einem Getriebegehäuse gelagert ist.

9. Schaltgetriebe nach einem der vorangehenden Ansprüche, **dadurch gekennzeichnet, dass** das Verriegelungselement (8) ausschließlich über den Eingriff einzelner Sperrfinger (24 - 27) in die zugeordneten Ausnehmungen (28-31) gelagert ist.

10. Schaltgetriebe nach einem der vorangehenden Ansprüche, **dadurch gekennzeichnet, dass** das Verriegelungselement (8) ausschließlich durch Betätigen der Betätigungselemente (15 - 18) verschiebbar ist.

11. Schaltgetriebe nach einem der vorangehenden Ansprüche, **dadurch gekennzeichnet, dass** die Breite (b) des Verriegelungselements (8) in Querrichtung größer ist als der Abstand einzelner Sperrfinger (24 - 27) in Querrichtung.

12. Schaltgetriebe nach einem der vorangehenden Ansprüche, **dadurch gekennzeichnet, dass** an mindestens einer Seite des Verriegelungselementes (8) in einem seitlichen Abstand ein Zusatzhebel (41, 42) schwenkbar gelagert ist, wobei zwischen dem Verriegelungselement (8) und dem Zusatzhebel (41, 42) zwei der vorhandenen Sperrfinger (24, 26; 25, 27) angeordnet sind.

13. Schaltgetriebe nach Anspruch 12, **dadurch gekennzeichnet, dass** der Zusatzhebel (41, 42) Ausnehmungen (43, 44) aufweist, die in Eingriff mit zugeordneten Sperrfingern (24 - 27) bringbar sind.

14. Schaltgetriebe nach einem der vorangehenden Ansprüche, **dadurch gekennzeichnet, dass** ein Schalthebel mit mehreren nebeneinanderliegenden Schaltgassen vorgesehen ist, wobei jeder Schaltgasse eine Schiebemuffe (13) zugeordnet ist und dass neben einer aktuell geschalteten Schaltgasse liegende Schaltgassen bzw. die neben einer der aktuell geschalteten Schaltgasse liegende Schaltgasse durch das Verriegelungselement (8) gesperrt ist.

15. Schaltgetriebe nach Anspruch 14, **dadurch gekennzeichnet, dass** außer einer aktuell geschalteten Schaltgasse sämtliche anderen Schaltgassen gesperrt sind.

16. Schaltgetriebe nach einem der vorangehenden Ansprüche, **dadurch gekennzeichnet, dass** das Verriegelungselement (8) eine Stange ist.

17. Schaltgetriebe nach einem der vorangehenden Ansprüche, **dadurch gekennzeichnet, dass** das Verriegelungselement (8) in seiner Längsrichtung mehrere langlochartige Ausnehmungen aufweist, in die die Betätigungselemente (15-18) ragen, wobei je nach Stellung des Verriegelungselements (8) bzw. der Betätigungselemente (15-18) mindestens eines der Betätigungselemente (15-18) schaltbar ist und wobei die Ausnehmungen (28 - 31), die in Eingriff mit den zugeordneten Sperrfingern (24 - 27) bringbar sind, jeweils an der einen bzw. an der gegenüberliegenden anderen inneren Längsseite der zugeordneten langlochartigen Ausnehmungen (28 - 31) vorgesehen sind.

## Claims

1. A change-speed gear comprising axially movable sliding sleeves which can each be in a neutral position or a gear-shift position, actuating elements (15 - 18) associated with the individual sliding sleeves and adapted to shift the sleeves from the neutral into the shift position or vice versa, wherein the actuating elements (15 - 18) each have a projecting stop finger (24 - 27), and a locking element (8) extending in the axial direction over the actuating elements (15 - 18) and formed with recesses (28 - 31) for blocking individual actuating elements (15 - 18), wherein when one of the sliding sleeves is in the shift or engaged position, at least some of the other sleeves are blocked in that their stop fingers (24 - 27) are in engagement with associated recesses (28 - 29) in the locking element (8),
**characterised in that**
the recesses (28 - 31) each have two notch-like converging operating slopes (32, 33) wherein when all actuating elements (15 - 18) are in the neutral position and one element (15 - 18) whose finger (24 - 27) is in engagement with a recess (28 - 31) in the locking element (8) is actuated, the said finger (24 - 27) slides along one of the operating slopes out of the recess (28 - 31) and moves the locking element (8) in the transverse direction (19 - 22) and brings at least some of the recesses (28 - 31) of the locking element (8) into engagement with the stop fingers (24 - 27) of the associated actuating elements (15 - 18).

2. A change-speed gear according to claim 1, **characterised in that** the actuating elements (15 - 18) are gear-shift rockers, each with an axis of rotation (19 - 22) transversely of the axial direction.

3. A change-speed gear according to claim 1 or 2, **characterised in that** the stop fingers (24 - 27) are offset relative to the locking element (8) so that some of the stop fingers (24 - 27) are on one longitudinal side of the locking element (8) and the other stop fingers (24 - 27) are on the opposite longitudinal side of the locking element (8).

4. A change-speed gear according to any of the preceding claims, **characterised in that** successive stop fingers (24 - 27) in the axial direction are disposed alternately on one or the other longitudinal side of the locking element (8).

5. A change-speed gear according to any of the preceding claims, **characterised in that** the actuating elements are gear-shift forks.

6. A change-speed gear according to any of the preceding claims, **characterised in that** the locking element (8) is fixed in the axial direction and movable in a transverse direction at right angles thereto.

7. A change-speed gear according to claim 2, **characterised in that** the locking element is movable in a transverse direction parallel to the axes of rotation of the actuating elements.

8. A change-speed gear according to any of the preceding claims, **characterised in that** the locking element (8) is mounted in a gear case so as to be movable in the transverse direction (19 - 22).

9. A change-speed gear according to any of the preceding claims, **characterised in that** the locking element (8) is mounted exclusively via engagement of individual stop fingers (24 - 27) in the associated recesses (28 - 31).

10. A change-speed gear according to any of the preceding claims, **characterised in that** the locking element (8) is movable exclusively by actuation of the actuating elements (15 - 18).

11. A change-speed gear according to any of the preceding claims, **characterised in that** the width (b) of the locking element (8) in the transverse direction is greater than the spacing between individual stop fingers (24 - 27) in the transverse direction.

12. A change-speed gear according to any of the preceding claims, **characterised in that** an additional lever (41, 42) is mounted for pivoting at a distance from at least one side of the locking element (8), wherein two of the stop fingers (24, 26; 25, 27) are disposed between the locking element (8) and the additional lever (41, 42).

13. A change-speed gear according to claim 12, **characterised in that** the additional lever (41, 42) has recesses (43, 44) which can be brought into engagement with associated locking fingers (24 - 27).

14. A change-speed gear according to any of the preceding claims, **characterised in that** a shift lever with a number of side-by-side shift lanes is provided, wherein each shift lane is associated with a sliding sleeve (13) and lanes near an actually engaged shift lane, or the lane near one of the actually engaged shift lanes, is blocked by the locking element (8).

15. A change-speed gear according to claim 14, **characterised in that** all shift lanes are blocked except for an actually engaged shift lane.

16. A change-speed gear according to any of the preceding claims, **characterised in that** the locking element (8) is a rod or bar.

17. A change-speed gear according to any of the preceding claims, **characterised in that** the locking element (8) in the longitudinal direction has a number of slot-like recesses into which the actuating elements (15 - 18) project, wherein depending on the position of the locking element (8) or the actuating elements (15 - 18) at least one actuating element (15 - 18) can be engaged and wherein the recesses (28 - 31) for bringing into engagement with the associated stop fingers (24 - 27) are provided on one or on the opposite other inner longitudinal side of the associated slot-like recesses (28 - 31).

## Revendications

1. Boîte de vitesses, comprenant
des manchons baladeurs mobiles axialement, qui se trouvent respectivement dans une position neutre ou dans une position activée,
des éléments d'actionnement (15 - 18) associés aux manchons baladeurs individuels, prévus pour activer les manchons baladeurs de leur position neutre dans leur position activée ou inversement, les éléments d'actionnement (15 - 18) présentant respectivement un taquet de blocage (24 - 27) saillant,
un élément de verrouillage (8) s'étendant en direction axiale au-dessus des éléments d'actionnement (15 - 18), et qui présente des évidements (28 - 31) pour bloquer des éléments d'actionnement individuels (15 - 18), au moins une partie des autres manchons baladeurs, lorsque l'un des manchons baladeurs se trouve dans sa position activée, étant bloquée par le fait que les taquets de blocage (24 - 27) s'engrènent avec des évidements associés (28 - 31) de l'élément de verrouillage (8),
**caractérisée en ce que**
les évidements (28 - 31) présentent respectivement deux plans inclinés fonctionnels (32, 33) se rejoignent à la façon d'une encoche, et, lorsque tous les éléments d'actionnement (15 - 18) se trouvent dans leur position neutre, lors de l'actionnement d'un élément d'actionnement (15 - 18), son taquet de blocage (24 - 27) s'engrène avec un évidement (28 - 31) de l'élément de verrouillage (8), ce taquet de blocage (24 - 27) glisse le long de l'un des plans inclinés fonctionnels hors de l'évidement (28 - 31) déplace ainsi l'élément de verrouillage (8) en direction transversale (19 - 22) et amène ainsi au moins une partie des évidements (28 - 31) de l'élément de verrouillage (8) à s'engrener avec les taquets de blocage (24 - 27) des éléments d'actionnement associés (15 - 18).

2. Boîte de vitesses selon la revendication 1,
**caractérisée en ce que**
les éléments d'actionnement (15 - 18) sont des fourchettes d'embrayage comportant chacune un axe de pivotement (19 - 22) s'étendant transversalement par rapport à la direction axiale.

3. Boîte de vitesses selon la revendication 1 ou 2,
**caractérisée en ce que**
les taquets de blocage (24 - 27) sont disposés de façon décalée par rapport à l'élément de verrouillage (8), de telle sorte qu'une partie des taquets de blocage présents (24 - 27) est disposée sur un premier côté longitudinal de l'élément de verrouillage (8) tandis que les taquets de blocage restants (24 - 27) se trouvent sur le côté longitudinal opposé de l'élément de verrouillage (8).

4. Boîte de vitesses selon l'une des revendications précédentes,
**caractérisée en ce que**
des taquets de blocage (24 - 27) successifs en direction axiale sont disposés en alternance sur le premier et sur le deuxième côté longitudinal de l'élément de verrouillage (8).

5. Boîte de vitesses selon l'une des revendications précédentes,
**caractérisée en ce que**
les éléments d'actionnement sont des fourchettes d'embrayage.

6. Boîte de vitesses selon l'une des revendications précédentes,
**caractérisée en ce que**
l'élément de verrouillage (8) est disposé fixement en direction axiale et de façon mobile dans une direction transversale perpendiculaire à celle-ci.

7. Boîte de vitesses selon la revendication 2,
**caractérisée en ce que**
l'élément de verrouillage est mobile dans une direction transversale parallèle aux axes de pivotement des éléments d'actionnement.

8. Boîte de vitesses selon l'une des revendications précédentes,
**caractérisée en ce que**
l'élément de verrouillage (8) est logé de façon mobile en direction transversale (19 - 22) dans un carter de boîte de vitesses.

9. Boîte de vitesses selon l'une des revendications précédentes,
**caractérisée en ce que**
l'élément de verrouillage (8) est logé exclusivement par le biais de l'engrènement des taquets de blocage individuels (24 - 27) dans les évidements associés (28 - 31).

10. Boîte de vitesses selon l'une des revendications précédentes,
**caractérisée en ce que**
l'élément de verrouillage (8) est mobile exclusivement par l'actionnement des éléments d'actionnement (15 - 18).

11. Boîte de vitesses selon l'une des revendications précédentes,
**caractérisée en ce que**
la largeur (b) de l'élément de verrouillage (8) en direction transversale est supérieure à la distance entre les taquets de blocage individuels (24 - 27) en direction transversale.

12. Boîte de vitesses selon l'une des revendications précédentes,
**caractérisée en ce qu'**
au niveau d'au moins un côté de l'élément de verrouillage (8), à une certaine distance latérale, est logé de façon pivotante un levier supplémentaire (41, 42), deux des taquets de blocage présents (24, 26 ; 25, 27) étant disposés entre l'élément de verrouillage (8) et le levier supplémentaire (41, 42).

13. Boîte de vitesses selon la revendication 12,
**caractérisée en ce que**
le levier supplémentaire (41, 42) présente des évidements (43, 44) qui peuvent s'engrener avec des taquets de blocage associés (24 - 27).

14. Boîte de vitesses selon l'une des revendications précédentes,
**caractérisée en ce qu'**
un levier de vitesses comporte plusieurs canaux adjacents, chaque canal étant associé à un manchon baladeur (13), et les canaux situés à côté d'un canal actuellement activé ou le canal situé à côté d'un canal actuellement activé est/sont bloqué(s) par l'élément de verrouillage (8).

15. Boîte de vitesses selon la revendication 14,
**caractérisée en ce qu'**
à l'exception d'un canal actuellement activé, tous les autres canaux sont bloqués.

16. Boîte de vitesses selon l'une des revendications précédentes,
**caractérisée en ce que**
l'élément de verrouillage (8) est une barre.

17. Boîte de vitesses selon l'une des revendications précédentes,
**caractérisée en ce que**
l'élément de verrouillage (8) présente dans sa direction longitudinale plusieurs évidements oblongs dans lesquels dépassent les éléments d'actionnement (15 - 18), au moins l'un des éléments d'actionnement (15 - 18) étant commutable en fonction de la position de l'élément de verrouillage (8) ou des éléments d'actionnement (15 - 18), et les évidements (28 - 31) qui peuvent s'engrener avec les taquets de blocage associés (24 - 27) sont respectivement prévus au niveau du premier côté longitudinal ou de l'autre côté longitudinal opposé intérieur des évidements (28 - 31) oblongs associés.
